Europäisches Patentamt

European Patent Office

Office européen des brevets

(19)

(11) Veröffentlichungsnummer: **0 260 442**

**A2**

(12) **EUROPÄISCHE PATENTANMELDUNG**

(21) Anmeldenummer: **87111739.6**

(22) Anmeldetag: **13.08.87**

(51) Int. Cl.⁴: **H01Q 3/20** , H01Q 1/28

(30) Priorität: **18.09.86 DE 3631735**

(43) Veröffentlichungstag der Anmeldung:
**23.03.88 Patentblatt 88/12**

(84) Benannte Vertragsstaaten:
**FR GB IT**

(71) Anmelder: **ERNO Raumfahrttechnik
Gesellschaft mit beschränkter Haftung
Hünefeldstrasse 1-5
D-2800 Bremen(DE)**

(72) Erfinder: **Heidmann, Hans-Jörg, Dipl.-Ing.
Halsmühlener Strasse 12
D-2800 Bremen(DE)**
Erfinder: **Nauck, Joachim, Dr.-Ing.
Fitgerstrasse 15
D-2800 Bremen(DE)**
Erfinder: **Rüdiger, Ress, Dr.-Ing.
H.-H.-Meier Allee 51
D-2800 Bremen(DE)**

(74) Vertreter: **Schramm, Ewald Werner Josef
Messerschmitt-Bölkow-Blohm GmbH
Patentabteilung TM 43 HB Hünefeldstrasse
1-5 Postfach 10 78 45
D-2800 Bremen 1(DE)**

(54) **Nachrichtenübertragungseinrichtung für Raumfahrzeuge.**

(57) Nachrichtenübertragungseinrichtung für Raumfahrzeuge mit beweglichem Sub-und Hauptreflektor,
bei der die nachrichtentechnischen Elektronikgeräte
sowie die Erreger für die Nachrichtensignale nicht
auf einer beweglichen Antennenplattform befindlich,
sondern fest mit den Satellitenzentralkörper verbunden sind.

Fig. 1

EP 0 260 442 A2

## Nachrichtenübertragungseinrichtung für Raumfahrzeuge

Die Erfindung betrifft eine Nachrichtenübertragungseinrichtung für Raumfahrzeuge, insbesondere für dreiachsstabilisierte sonnenorientierte Nachrichtensatelliten.

Dreiachsstabilisierte Nachrichtensatelliten verfügen in der Regel über einen Satellitenzentralkörper, an ihm angebrachte Solargeneratoren zur elektrischen Energieversorgung sowie über eine auf dem Satellitenzentralkörper angeordnete Struktur mit Antennen und nachrichtentechnischen Elektronikgeräten (Nutzlast-/Antennenplattform). Zur Stabilisierung ihrer Umlaufbahn um die Erde, sowie zur Erfüllung ihrer Missionsaufgaben, werden diese Satelliten so konstruiert, daß entweder der Satellit mit der Antennenplattform zur Erde orientiert ist und seine Solargeneratoren während der Erdumkreisung der Sonne nachgefürt werden, oder die Solargeneratoren sind starr mit dem Satellitenzentralkörper verbunden und mit diesem zur Sonne ausgerichet. Im letzteren Fall muß die Nutzlast des Nachrichtensatelliten (Antennen und nachrichtentechnische Elektronikgeräte) auf der Umlaufbahn der Erde nachgeführt werden. Bei spinnstabilisierten Satelliten, bei denen die Spinnachse senkrecht zur Bahnebene steht, wird ebenso wie bei den dreiachsstabilisierten sonnenorientierten Satelliten die Nutzlast mit der Antennenplattform entdrallt der Erde nachgeführt, während die mit dem Solargenerator belegte Oberfläche des Rotationskörpers zur Sonne ausgerichtet ist.

Mit diesen bekannten Anordnungen ist der Nachteil verbunden, daß die nachrichtentechnischen Elektronikgeräte auf der Antennenplattform während eines Umlaufs um die Erde einer unterschiedlichen Sonneneinstrahlung ausgesetzt sind, die hohe Anforderungen an die Thermalkontrolleinrichtung dieser Nutzlast stellt. In der Regel wird die überschüssige Wärmemenge von diesen Nutzlastgeräten abgeführt und über Wärmeradiatoren abstrahlt. Die Entfernung der nachrichtentechnischen Elektronikgeräte von der Antennenplattform und ihre Plazierung in einem thermisch konstanten Umfeld konnte bisher nicht realisiert werden. Eine derartige Trennung von Verstärkereinrichtungen und nachführbaren Antennen würde bedeuten, daß die nachrichtentechnischen Signale über einen Drehmechanismus von den nachrichtentechnischen Elektronikgeräten zum Erregersystem der Antennen geführt werden müßten. Dies bliebe nicht ohne negative Folgen für die nachrichtentechnische Leistungsfähigkeit des Satelliten.

Der Erfindung liegt die Aufgabe zugrunde, eine Einrichtung zu schaffen, die eine wärmetechnisch vorteilhafte Plazierung der nachrichtentechnischen Elektronikgeräte erlaubt, die nutzlastspezifische Leistungsfähigkeit des Satelliten nicht einschränkt und zudem die Beweglichkeit des Antennennachführmechanismus gewährleistet.

Diese Aufgabe wird erfindungsgemäß dadurch gelöst, daß auf dem Satellitenzentralkörper ein nachrichtentechnisches Signalübertragungssystem angeordnet wird, welches neben den Erregern geeignete zusätzliche Reflektoren beinhaltet, die den Sendestrahl zu einem Sub-und einem Hauptreflektor weiterleiten, wobei der Subreflektor mit dem Hauptreflektor fest verbunden und beide mittels eines Drehmechanismus der Erde nachführbar sind.

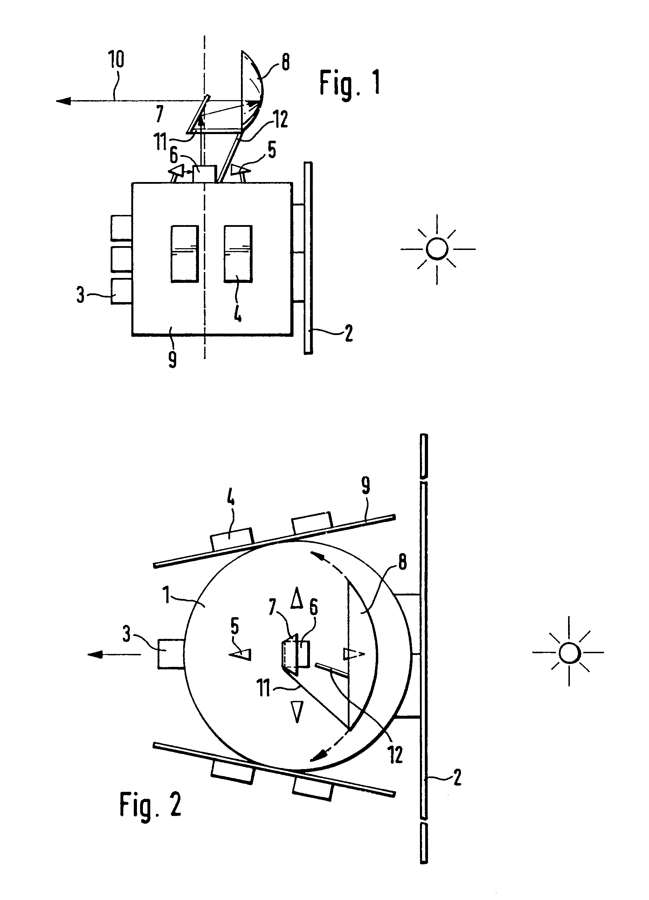

Mit Hilfe der Zeichnungen (Figur 1 und Figur 2) lassen sich die in den Ansprüchen ausgeführten kennzeichnenden Merkmale der Erfindung veranschaulichen. Im Einzelnen zeigt

Figur 1 einen sonnenorientierten, dreiachsstabilisierten Nachrichtensatelliten in der Seitenansicht, sowie

Figur 2 den gleichen Satelliten in der Draufsicht.

An einem Satellitenzentralkörper 1 ist ein ständig auf die Sonne ausgerichteter Solargenerator 2 befestigt. Im Schattenbereich des Solargenerators 2 sind an Nutzlastmontageflächen 9 sowie am Satellitenzentralkörper 1 Elektronikgeräte 3 für die Satellitenkontrolle sowie Elektronikgeräte 4 für die Nachrichtentechnik befestigt. Auf der Ober- und/oder Unterseite des Satelliten befinden sich die Sende-und Empfangseinrichtungen.

Im Gegensatz zu den bisherigen Nachrichtensatellitenkonzepten ist bei der erfindungsgemäßen Bauweise nur der Hauptreflektor 8 und ein mit diesem verbundener Subreflektor 7 der Erde nachführbar am Satelliten befestigt. Eine geeignete Anzahl von Erregern 5 für die Erzeugung der Nachrichtensignale ist fest mit dem Satellitenzentralkörper 1 verbunden am Satelliten angeordnet, daß wenigstens einer von ihnen über einen ebenfalls fest mit dem Satelliten verbundenen Mehrfachreflektor 6 den Subreflektor 7 und über diesen den Hauptreflektor 8 speisen kann.

Neben dem Einsatz der erfindungsgemäßen Anordnung der nachrichtentechnischen Nutzlast bei dreiachsstabilisierten, sonnenorientierten Satelliten list diese Trennung von nachrichtentechnischen Elektronikgeräten 4 sowie den Erregern 5 und Antennen auch bei spinstabilisierten Satellitenkörpern

sowie bei dreiachsstabilisierten Kommunikationsplattformen (im Orbit kreisendes Antennensystem, an dem verschiedene Satelliten-Nutzlasten andocken können) einsetzbar.

Die Vorteile der Trennung der nachrichtentechnischen Elektronikgeräte 4 von den der Erde nachgeführten Antennen liegt darin, daß diese Geräte in einem nicht von der Sonne bestrahlten und damit thermisch konstanten Umfeld plaziert werden können, was eine Reduzierung des erforderlichen Aufwandes im Bereich des Thermalhaushalts des Satelliten zur Folge hat. Zudem kann durch die Reduzierung der mit den Antennen zu bewegenden Teile die mechanische und elektronische Auslegung des Entdrall-bzw. Nachfühsystems der Antennenanlage einfacher und kostengünstiger ausgelegt werden. Des weiteren ist hiermit ein weiterer Schritt in Richtung auf die Standadisierbarkeit von Nachrichtensatelliten mit dem Ziel einer Kostensenkung gemacht.

## Ansprüche

1. Nachrichtenübertragungseinrichtung für Raumfahrzeuge mit einem Subreflektor und einem Hauptrefelktor, wobei beide Reflektoren miteinander starr verbunden und gemeinsam drehbar auf einem dreiachsstabilisierten sonnenorientierten oder spinnstabilisierten Satellitenzentralkörper gelagert sind und bei welcher der Hauptreflektor mit der von ihm erzeugten Strahlungskeule die Erde oder Teile der Erde ausleuchtet, **dadurch gekennzeichnet**, daß nachrichtentechnischen Elektronikgeräte (4) (z.B. Signalverstärker) außerhalb der Antennenplattform in einem thermisch konstanten Umfeld angeordnet sind, daß Erreger (5) für die Erzeugung von Nachrichtensignale unbeweglich mit dem Satellitenzentralkörper (1) verbunden sind, daß die Anordnung der Erre ger (5) eine Bestrahlung eines Mehrfachreflektors (6) erlaubt, daß der Mehrfachreflektor (6) unbeweglich auf dem Satellitenzentralkörper (1) befestigt ist, daß die Erreger (5) die von ihnen erzeugten Nachrichtensignale auf den Mehrfachreflektor (6) lenken, daß die Nachrichtensignale von dem Mehrfachreflektor (6) zu dem Subreflektor (7) und von diesem zu dem Hauptreflektor (8) weitergeleitet werden.

2. Nachrichtenübertragungseinrichtung für Raumfahrzeuge,
**dadurch gekennzeichnet**, daß das Raumfahrzeug über Nutzlastmontageflächen (9) verfügt, die am Satellitenzentralkörper (1) befestigt sind und durch den Solargenerator (2) abge-schattet werden.

3. Nachrichtenübertragungseinrichtung für Raumfahrzeurge,
**dadurch    gekennzeichnet**,    daß    die nachrichtentechnischen Elektronikgeräte (4) als Module auf den Nutzlastmontageflächen (9) befestigt sind.

4. Nachrichtenübertragungseinrichtung für Raumfahrzeuge,
**dadurch gekennzeichnet**, daß auf einem Satellitenzentralkörper (1) mehrere Antennenanlagen mit der Erde nachführbaren Sub-und Hauptrefelktoren (7), (8) von einem oder mehreren Mehrfachreflektoren (6) mit Nachrichtensignalen versorgt werden.

5. Nachrichtenübertragungseinrichtung für Raumfahrzeuge,
**dadurch gekennzeichnet**, daß es sich bei dem benutzten Raumfahrzeug um eine Kommunikationsplattform handelt, bestehend aus einer Anzahl der Erde nachführbaren Hauptreflek toren (8), Subreflektoren (7), Mehrfachreflektoren (6), Erregern (5), einer Energieversorgungseinrichtung sowie Steuerungs-und Kontrolleinrichtungen und einer mechanisch verbindenden Struktur, an der nachrichtentechnische Nutzlasten angedockt oder abgekoppelt werden.

Fig. 1

Fig. 2